# EUROPÄISCHE PATENTSCHRIFT

(11) **EP 0 983 624 B1**
(45) Veröffentlichungstag und Bekanntmachung des Hinweises auf die Patenterteilung: **19.12.2001**
(21) Anmeldenummer: 98934856.0
(22) Anmeldetag: 28.05.1998
(51) Int. Cl.: H02G 5/06

(54) **GASISOLIERTE ROHRLEITERANLAGE MIT EINEM DURCH SÄULENSTÜTZER ABGESTÜTZTEN INNENLEITER**
GAS-INSULATED PIPELINE SYSTEM WITH AN INNER LINE SUPPORTED BY COLUMN-TYPE SUPPORT STRUCTURES
SYSTEME DE CONDUCTEURS TUBULAIRES, ISOLE AU GAZ, AVEC UN CONDUCTEUR INTERIEUR SOUTENU PAR DES SUPPORTS DE TYPE COLONNES

(30) Priorität: 29.05.1997 DE 19722897; 07.05.1998 DE 19822126
(43) Veröffentlichungstag der Anmeldung: 08.03.2000
(73) Patentinhaber: SIEMENS AKTIENGESELLSCHAFT, 80333 München (DE)
(72) Erfinder: KELCH, Thomas, D-13465 Berlin (DE); KIEPER, Mario, D-14612 Falkensee (DE); BRÄUNLICH, Christoph, D-12529 Schönefeld (DE)
(86) Internationale Anmeldenummer: DE9801522
(87) Internationale Veröffentlichungsnummer: WO9854808

(56) Entgegenhaltungen:
- DE-A- 2 360 070
- DE-A- 4 444 554
- DE-C- 19 515 308
- FR-A- 852 037
- FR-A- 2 581 484

## Beschreibung

Die Erfindung liegt auf dem Gebiet der gasisolierten Rohrleiteranlagen, wie sie zur Energieübertragung verwendet werden, und ist bei der konstruktiven Ausgestaltung solcher für den rohrförmigen Innenleiter vorgesehener Abstützbereiche anzuwenden, bei denen als Stützelemente isolierende Säulenstützer verwendet werden.

Bei einer bekannten Rohrleiteranlage dieser Art ist zur Fixierung eines Säulenstützers am rohrförmigen Innenleiter jeweils eine metallische Hülse vorgesehen, die das eine Ende des Säulenstützers umfaßt und eine Bohrung im Innenleiter wenigstens teilweise durchsetzt. Diese Hülse kann sacklochartig ausgebildet und mit einer als Feldsteuerelektrode ausgebildeten Krempe versehen sein (DE 44 44 554 A1). Mit derartigen Säulenstützern kann montagefreundlich eine Positionierung des rohrförmigen Innenleiters oberhalb der Mittelachse des Kapselungsrohres gewährleistet werden (DE 195 15 308 C1). - Andererseits erfordert eine derartige Ausgestaltung des Abstützbereiches eine spezielle mechanische Bearbeitung (Bohren) des Innenleiters, die zu einer mechanischen Schwächung des Leiterquerschnittes in der Stützerebene führt.

Ausgehend von einer gasisolierten Rohrleiteranlage mit den Merkmalen des Oberbegriffes des Patentanspruches 1 liegt der Erfindung die Aufgabe zugrunde, den Abstützbereich so auszugestalten, daß die Handhabung des rohrförmigen Innenleiters bei seiner Herstellung, beim Transport und bei der Montage möglichst wenigen einschränkenden Randbedingungen unterliegt.

Zur Lösung dieser Aufgabe ist gemäß der Erfindung vorgesehen, daß der Innenleiter im Abstützbereich aus einem durch Gießen hergestellten rohrförmigen Zwischenstück besteht, dessen Länge etwa doppelt so groß ist wie sein Durchmesser und das an seinen Enden mit den angrenzenden Abschnitten des rohrförmigen Innenleiters verbunden ist, und daß die sacklochartige metallische Hülse einstückig mit dem Zwischenstück ausgebildet ist.

Bei einer derartigen Ausgestaltung des Abstützbereiches können die einzelnen Abschnitte des rohrförmigen Innenleiters ohne zusätzliche mechanische Bearbeitung hergestellt und unabhängig von der Lage und der Anzahl von Abstützbereichen in der Rohrleiteranlage auf die Baustelle geliefert werden. Zugleich ist das Risiko minimiert, daß der seitlich aufgebohrte rohrförmige Innenleiter durch Transport oder Lagerung ausknicken kann. Das Einbringen der einzelnen Leiterteile in die Kapselung der Rohrleiteranlage unterliegt weniger einschränkenden Randbedingungen, da unterschiedlich lange Rohrleiterabschnitte zusammengefügt werden können, so daß beispielsweise auch kürzere Leiterstücke verarbeitet werden können. Durch die Ausgestaltung des Abstützbereiches mit Hilfe eines Gußteiles ergeben sich günstige Platzverhältnisse und damit zusätzliche Gestaltungsmöglichkeiten, so daß das als Verbindungsstück vorgesehene Gußteil dielektrisch und mechanisch optimiert werden kann. So besteht beispielsweise die Möglichkeit, bei zwei oder drei in einem Abstützbereich verwendeten Säulenstützern diese axial dichter zusammenzuschieben oder sogar in eine Ebene zu setzen. Bei axial dicht zusammengeschobenen Säulenstützern stabilisiert auch die innere Gußgeometrie das Zwischenstück als Ganzes. - Durch die Verwendung eines gegossenen Zwischenstückes werden auch Toleranzprobleme innerhalb der Stützerebene reduziert; weiterhin bietet die Integration der Hülse in das Zwischenstück eine hohe Sicherheit gegen Späne, die aufgrund der Bearbeitung der Enden der Innenleiterteile für Verbindungszwecke im Innenleiter vorhanden sein können und später herausfallen könnten.

Beim Einfügen des neuen Zwischenstückes in den Verlauf des rohrförmigen Innenleiters wird zweckmäßig derart vorgegangen, daß zunächst das Zwischenstück mit den beiden anschließenden Abschnitten des Innenleiters kraft-, stoff- oder formschlüssig verbunden wird und daß anschließend der bzw. die Säulenstützer in das Zwischenstück eingesetzt werden. Bei der Verbindung des Zwischenstückes mit den anschließenden Abschnitten des Innenleiters kann es sich um eine Schrumpf-, Schweiß- oder Preßlamellen-Verbindung, um eine Steckverbindung oder um eine Schraubverbindung unter Verwendung einer Schraubklemme oder mittels sich axial überlappender Endabschnitte handeln.

Bei Zwischenstücken, bei denen die Säulenstützer eine gewisse axiale Entfernung voneinander haben, kann es zur mechanischen Stabilisierung zweckmäßig sein, daß sich der sackiochartige, hülsenförmige Bereich des Zwischenstückes mittels einer Versteifungsrippe am rohrförmigen Bereich abstützt.

Mit Hilfe des Zwischenstückes kann auch der Gestaltung der Rohrleiteranlage als Ganzes Rechnung getragen werden, indem das Zwischenstück beispielsweise eine oder zwei radiale Öffnungen aufweist, durch die der Innenraum des Innenleiters evakuiert bzw. mit einem Gasgemisch gefüllt werden kann. Bezüglich der Überwachung der gesamten Anlage kann das Zwischenstück auch zur Unterbringung von Sensoren, z. B. Oberflächenwellenfiltern zur Druck- und Temperaturmessung, verwendet werden. Derartige Sensoren können vor dem Verbinden des Zwischenstückes mit den anschließenden Leiterabschnitten oder durch kleine Gußöffnungen in das Zwischenstück eingesetzt werden. Weiterhin können als Antenne wirkende Längs- oder Querschlitze eingebracht sein.

Weiterhin kann das rohrförmige Zwischenstück dazu verwendet werden, die Rohrleiteranlage im Hinblick auf Kurzschlußbeanspruchungen zu ertüchtigen. Wenn der Innenleiter jeweils mit nur zwei Stützern abgestützt ist, könnten Kurzschlußkräfte eine radiale Verlagerung des Innenleiters bewirken. Dem kann dadurch vorgebeugt werden, daß in dem rohrförmigen Zwischenstück ein oder zwei die Masse des Zwischenstückes wesentlich erhöhende Einsätze aus Aluminium oder Edelstahl angeordnet sind.

Ausführungsbeispiele für die gemäß der Erfindung vorgesehene Ausgestaltung von Abstützbereichen einer gasisolierten Rohrleiteranlage sind in den Figuren 1 bis 7 dargestellt. Dabei zeigt:
- Figur 1: einen Längsabschnitt einer Rohrleiteranlage mit zwei Abstützbereichen in prinzipieller Darstellung,
- Figur 2: ein gemäß der Erfindung ausgebildetes Zwischenstück im Längsschnitt in Verbindung mit zwei angrenzenden Innenleiterabschnitten,
- Figur 3: ein Zwischenstück im Querschnitt mit einer ersten Variante für die axiale Fixierung des Säulenstützers im Zwischenstück,
- Figur 4: ein Zwischenstück im Querschnitt mit einer zweiten und dritten Variante zur axialen Fixierung eines Säulenstützers,
- Figur 5: eine Querschnittsdarstellung eines Zwischenstückes für zwei Säulenstützer in Zuordnung zur umgebenden Kapselung und die
- Figuren 6 und 7: ein Zwischenstück im Längs- und Querschnitt mit in einer relativ breiten Versteifungsrippe angeordneten Sacklöchern und mit Zusatzgewichten.

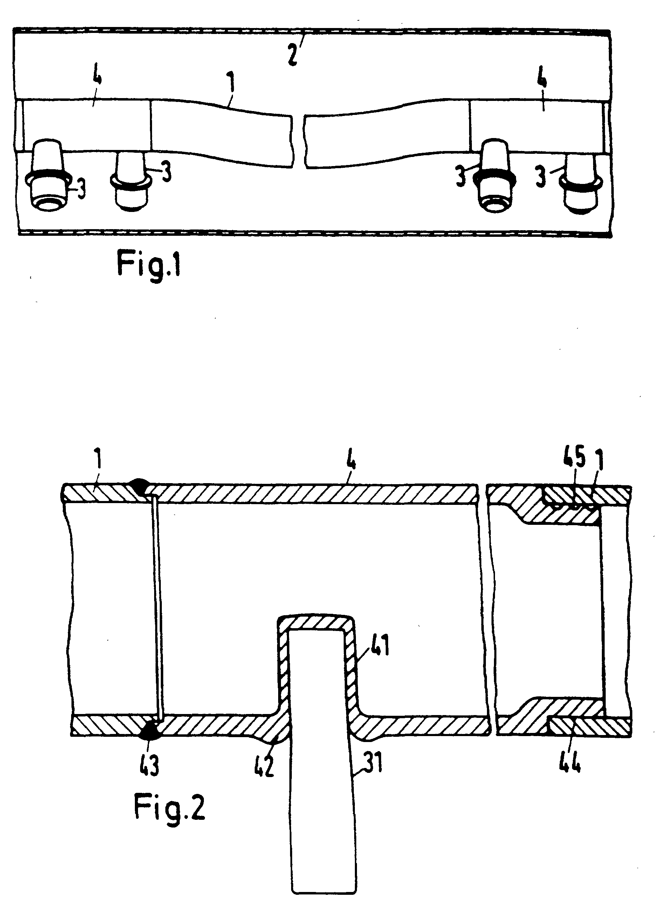

Figur 1 zeigt in Anlehnung an Figur 2 der DE 195 15 308 C1 einen Längsabschnitt einer gasisolierten Rohrleiteranlage, bei der ein rohrförmiger Innenleiter 1 in einer Kapselung 2 angeordnet und gegen diese Kapselung mit Hilfe von isolierenden Stützelementen 3 in Form von Säulenstützern abgestützt ist. Dabei sind in größeren Abständen jeweils zwei Säulenstützer 3 vorgesehen, die sowohl in Achsrichtung als auch in Umfangsrichtung des Innenleiters 1 versetzt zueinander angeordnet sind. Die Figur 1 läßt weiterhin erkennen, daß im Zuge des rohrförmigen Innenleiters 1 spezielle Zwischenstücke 4 eingefügt sind, in die die Stützelemente 3 eingreifen und die mit den anschließenden Abschnitten des Innenleiters verbunden sind.

Figur 2 zeigt ein solches Zwischenstück 4, das an seinen beiden Enden entweder über eine Schweißverbindung 43 oder eine Schrumpfverbindung 44 oder eine Preßlamellen-Verbindung 45 mit den beiden angrenzenden Innenleiterabschnitten 1 verbunden ist. Bei dem Zwischenstück 4 handelt es sich um ein Gußteil, vorzugsweise aus Aluminium, in das zur Aufnahme des einen Endes eines Säulenstützers 31 eine sacklochartige Hülse 41 integriert ist. Diese Hülse 41 befindet sich im wesentlichen im Innenraum des Zwischenstückes 4 und geht am Umfang des Zwischenstückes mittels einer Krempe 42, die als Feldsteuerelektrode dient, in den zylindrischen Teil des Zwischenstückes 4 über.

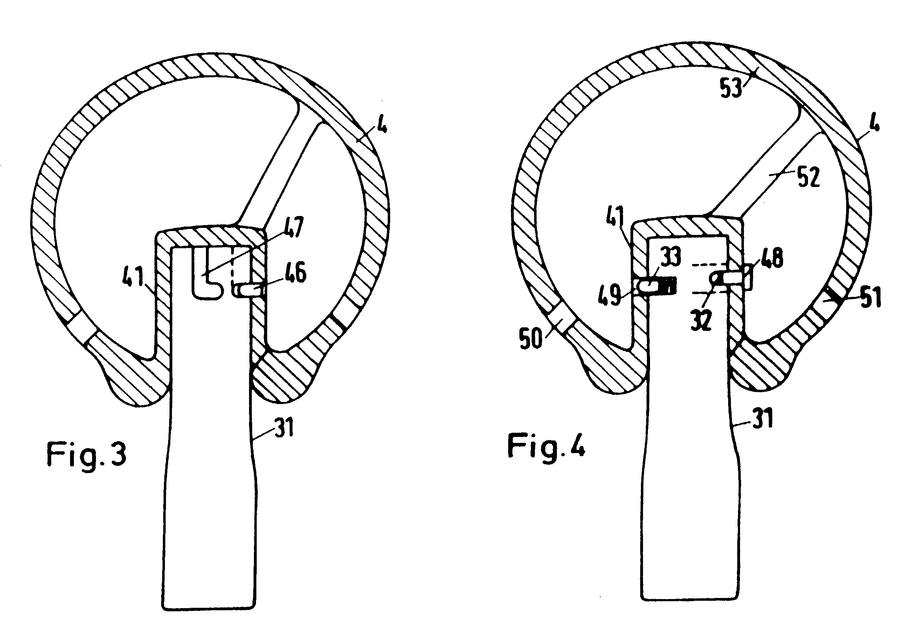

Gemäß Figur 3 kann zur Fixierung des Säulenstützers 31 in der Hülse 41 ein in der Wandung der Hülse 41 fixierter Zapfen 46 vorgesehen sein, der in einen Bajonettschlitz 47 des Säulenstützers 31 eingreift.

Gemäß Figur 4 kann zur Fixierung des Säulenstützers 31 in der sacklochartigen Hülse 41 eine mit einem Zapfen versehene Spange 48 vorgesehen sein, deren Zapfen in eine Bohrung 32 des Säulenstützers eingreift. Alternativ kann auch im Säulenstützer 31 ein federbelasteter Zapfen 33 vorgesehen sein, der in eine seitliche Querbohrung 49 der Hülse 41 einschnappt.

Gemäß Figur 4 können in der Wandung des Zwischenstückes eine Bohrung 50 zum Zwecke der Evakuierung und/oder des Einfüllens eines Gasgemisches oder auch ein Längs- oder Querschlitz 51 zum Einfügen von Antennen oder auch eine Versteifungsrippe 52, über die sich die Hülse 41 am rohrförmigen Bereich 53 des Zwischenstückes 4 abstützt, vorgesehen sein.

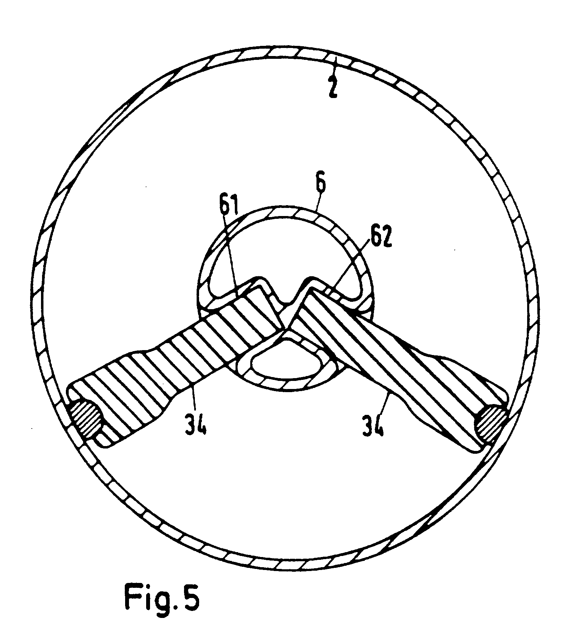

Die gemäß den Figuren 2 bis 4 vorgesehene Anordnung von Säulenstützern 31 kann am Zwischenstück 4 auch zwei- oder dreimal vorgesehen sein, zweckmäßig in Umfangs- und Achsrichtung versetzt zueinander. Gemäß Figur 5 können zwei Säulenstützer 34 auch in derselben Stützerebene angeordnet sein. Die Ausgestaltung der Hülsen 61 und 62 kann dabei so gewählt werden, daß sich die Ausformung einer feldsteuernden Krempe erübrigt. Dies gilt auch für die Ausführungsbeispiele gemäß den Figuren 2 bis 4.

Durch die Verwendung von als Gießteil ausgebildeten Zwischenstücken kann die Zuordnung von Säulenstützern und Zwischenstück mittels der metallischen Hülsen auch so erfolgen, daß die Mittelachse der Säulenstützer die Achse des rohrförmigen Innenleiters nicht kreuzt, d. h. die Säulenstützer müssen nicht radial zum Innenleiter angeordnet sein.

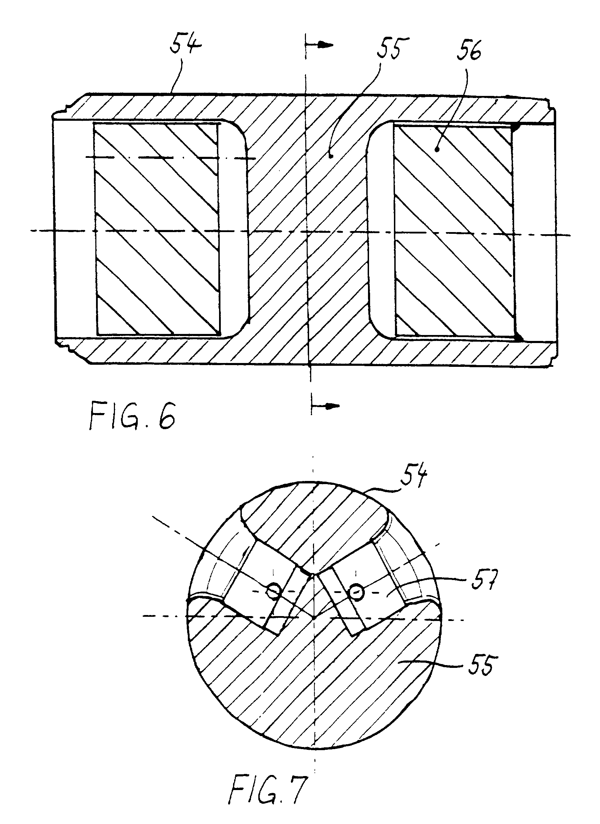

Gemäß Figur 6 ist das rohrförmige Zwischenstück 54 mit einer relativ breiten, mittig angeordneten Versteifungsrippe 55 versehen. In den beiden rechts und links von der Versteifungsrippe 55 verbleibenden Hohlräumen kann je ein Zusatzgewicht 56 aus einem Aluminium- oder Edelstahl-Halbzeug angeordnet und dort durch eine Verschraubung oder eine Verschweißung fixiert sein.

Gemäß Figur 7 enthält die Versteifungsrippe 55 auch zwei sacklochartige Ausnehmungen 57, die zur Aufnahme von Säulenstützern dienen.

## Patentansprüche

1. Gasisolierte Rohrleiteranlage mit einem rohrförmigen Innenleiter (1), der in Abständen mit Hilfe von wenigstens einem isolierenden Säulenstützer (3) gegen eine rohrförmige Kapselung (2) abgestützt ist,
wobei jeder isolierende Säulenstützer (3) an seinem einen Ende von einer sacklochartigen metallischen Hülse (41) umfaßt ist, die mit dem rohrförmigen Innenleiter (1) verbunden ist und dabei in diesen hineinragt,
**dadurch gekennzeichnet,**
**daß** der Innenleiter im Abstützbereich aus einem durch Gießen hergestellten rohrförmigen Zwischenstück (4) besteht, dessen Länge etwa doppelt so groß wie sein Durchmesser ist und das an seinen Enden mit den angrenzenden Abschnitten des rohrförmigen Innenleiters (1) verbunden ist,
und **daß** die sacklochartige metallische Hülse (41) einstückig mit diesem Zwischenstück (4) ausgebildet ist.

2. Rohrleiteranlage nach Anspruch 1,
**dadurch gekennzeichnet, daß**
sich der sacklochartig hülsenförmige Bereich (41) des Zwischenstückes (41) mittels einer Versteifungsrippe (52) am rohrförmigen Bereich (53) abstützt.

3. Rohrleiteranlage nach Anspruch 1 oder 2,
**dadurch gekennzeichnet, daß**
das Zwischenstück (4) mit wenigstens einer Entlüftungsbohrung (50) versehen ist.

4. Rohrleiteranlage nach einem der Ansprüche 1 bis 3,
**dadurch gekennzeichnet, daß**
das Zwischenstück (4) mit wenigstens einem Längs- oder Querschlitz (51) begrenzter Länge versehen ist.

5. Rohrleiteranlage nach einem der Ansprüche 1 bis 4,
**dadurch gekennzeichnet, daß** in dem rohrförmigen Zwischenstück (54) ein die Masse des Zwischenstückes wesentlich erhöhender Einsatz (56) aus Aluminium oder Edelstahl angeordnet ist.

## Claims

1. Gas-insulated tubular conductor system having a tubular inner conductor (1), which is supported at intervals .against tubular encapsulation (2) with the aid of at least one insulating pillar-type support (3),
with each insulating pillar-type support (3) being surrounded at one of its ends by a metallic sleeve (41) which is like a blind hole, is connected to the tubular inner conductor (1), and at the same time projects into it,
**characterized**
**in that** the inner conductor is composed in the support region of a tubular adapter (4) which is produced by casting and whose length is approximately twice as great as its diameter, and which is connected at its ends to the adjacent sections of the tubular inner conductor (1),
and **in that** the metallic sleeve (41), which is like a blind hole, is formed integrally with this adapter (4).

2. Tubular conductor system according to Claim 1,
**characterized in that**
the area (41), which is in the form of a sleeve and is like a blind hole, in the adapter (41) is supported on the tubular area (53) by means of a reinforcing rib (52).

3. Tubular conductor system according to Claim 1 or 2,
**characterized in that**
the adapter (4) is provided with at least one vent hole (50).

4. Tubular conductor system according to one of Claims 1 to 3,
**characterized in that**
the adapter (4) is provided with at least one longitudinal or transverse slot (51) of limited length.

5. Tubular conductor system according to one of Claims 1 to 4,
**characterized in that** an insert (56), which considerably increases the mass of the adapter and is composed of aluminium or stainless steel is arranged in the tubular adapter (54).

## Revendications

1. Système de conducteurs tubulaires, isolé par du gaz, comprenant un conducteur (1) intérieur tubulaire, qui est soutenu à intervalles sur un blindage (2) tubulaire à l'aide d'au moins un support (3) isolant de type colonne,
chaque support (3) isolant de type colonne étant entouré à une de ses extrémités par un manchon (41) métallique du genre perçage borgne, qui est assemblé au conducteur (1) intérieur tubulaire et y fait saillie,
**caractérisé en ce que** le conducteur intérieur est constitué, dans la région de soutien, d'un élément (4) intercalé tubulaire fabriqué par moulage, dont la longueur est égale environ au double de son diamètre et qui est assemblé à ses extrémités aux tronçons adjacents du conducteur (1) intérieur tubulaire, et **en ce que** le manchon (41) métallique du genre perçage borgne est réalisé d'un seul tenant avec cet élément (4) intercalé.

2. Système de conducteurs tubulaires suivant la revendication 1,
**caractérisé en ce que** la région (41) en forme de manchon du genre perçage borgne de l'élément (4) intercalé est soutenue sur la région (53) tubulaire au moyen d'une nervure (52) de renforcement.

3. Système de conducteurs tubulaires suivant la revendication 1 ou 2, **caractérisé en ce que** l'élément (4) intercalé est doté d'au moins un perçage (50) d'évacuation d'air.

4. Système de conducteurs tubulaires suivant l'une des revendications 1 à 3, **caractérisé en ce que** l'élément (4) intercalé est doté d'au moins une fente (51) longitudinale ou transversale de longueur limitée.

5. Système de conducteurs tubulaires suivant l'une des revendications 1 à 4, **caractérisé en ce qu'**un insert (56) en aluminium ou acier spécial, augmentant sensiblement la masse de l'élément intercalé, est disposé dans l'élément (54) intercalé tubulaire.
